# EUROPÄISCHE PATENTSCHRIFT

(11) **EP 3 114 684 B1**
(45) Veröffentlichungstag und Bekanntmachung des Hinweises auf die Patenterteilung: **08.05.2024**
(21) Anmeldenummer: 14711930.9
(22) Anmeldetag: 04.03.2014
(51) Int. Cl.: G11B 19/02, G06F 3/048

(54) **VERFAHREN UND VORRICHTUNG ZUM STEUERN DER AUSWAHL VON MEDIENDATEIEN ZUR WIEDERGABE**
METHOD AND DEVICE FOR CONTROLLING THE SELECTION OF MEDIA DATA FOR REPRODUCTION
PROCÉDÉ ET DISPOSITIF POUR LA COMMANDE DE LA SÉLECTION DE FICHIERS DE CONTENU EN VUE DE LA REPRODUCTION

(43) Veröffentlichungstag der Anmeldung: 11.01.2017
(73) Patentinhaber: VOLKSWAGEN AKTIENGESELLSCHAFT, 38440 Wolfsburg (DE)
(72) Erfinder: SCHULZ, Robert, 38179 Schwülper (DE)
(74) Vertreter: Meissner Bolte Partnerschaft mbB
(86) Internationale Anmeldenummer: PCT/EP2014/054137
(87) Internationale Veröffentlichungsnummer: WO 2015/131928

(56) Entgegenhaltungen:
- CN-A- 102 662 601
- US-A1- 2006 265 421
- US-A1- 2010 131 844

## Beschreibung

Verfahren und Vorrichtung zum Steuern der Auswahl von Mediendateien zur Wiedergabe Die Erfindung betrifft ein Verfahren und eine Vorrichtung zum Steuern der Auswahl von Mediendateien zur Wiedergabe.

In der Regel kann ein Nutzer eine Reihenfolge bei einer zufälligen Wiedergabe von Mediendateien, beispielsweise Audio- oder Videodateien, nicht beeinflussen. Die Reihenfolge wird dabei meist durch einen Algorithmus für ein zufälliges Auswahlverfahren bestimmt. Ein solches zufälliges Auswahlverfahren wird in einer sogenannten Shuffle-Funktion, beispielsweise in Media-Playern, bereitgestellt. Dabei sind die Wahrscheinlichkeiten, dass eine Mediendatei zur Wiedergabe ausgewählt wird, in der Regel für alle Mediendateien gleich hoch. Der Nutzer hat im Allgemeinen keine Möglichkeit, die Auswahlwahrscheinlichkeiten zu beeinflussen. Bekannt sind Verfahren, bei denen die Vorlieben des Nutzers über die Zeit erfasst werden, und daraus Bevorzugungsgrade von Dateien automatisch bestimmt werden. Dabei kann der Nutzer jedoch nicht direkt, sondern lediglich indirekt die Abspielwahrscheinlichkeit der Dateien beeinflussen.

Dazu beschreibt die DE 102 43 505 A1 ein Verfahren zum Wiedergeben von Daten, bei welchem mit jeder gespeicherten Datei ein Wert abgespeichert ist, der die Bevorzugung dieser Datei durch den Nutzer repräsentiert. Dabei wird der Bevorzugungsgrad automatisch über die Hör- und Sehgewohnheiten des Nutzers bestimmt. Je häufiger eine Datei angesehen oder angehört wird, desto höher ist der Wert des Bevorzugungsgrades.

Auch die US 7,685,204 B2 beschreibt ein Verfahren, bei dem den Mediendateien für eine Shuffle-Funktion Wahrscheinlichkeiten aus den Hörvorlieben eines Nutzers zugeordnet werden. Schließlich ist in der US 2012/0232681 ein Verfahren beschrieben, bei dem ein Liste aus Mediendateien erzeugt werden kann, die dann zufällig wiedergegeben werden kann.

Nachteilig an den Verfahren und Vorrichtungen des Standes der Technik ist dabei, dass der Nutzer die Reihenfolge der Wiedergabe bei einer Shuffle-Funktion lediglich indirekt über Hör- oder Sehgewohnheiten beeinflussen kann.

Die US 2010/131844 A1 beschreibt ein Verfahren und eine Vorrichtung, bei der Wiedergabewahrscheinlichkeiten durch eine Eingabe beeinflusst werden können. Die US 2010/131844 A1 unterscheidet sich von der beanspruchten Erfindung in der Art der Eingabe.

Es ist daher Aufgabe der Erfindung, ein Verfahren und eine Vorrichtung bereitzustellen, bei denen ein Nutzer auf einfache und intuitive Weise die Wahrscheinlichkeit, dass eine Mediendatei zur Wiedergabe ausgewählt wird, direkt beeinflussen kann.

Diese Aufgabe wird durch ein Verfahren nach Anspruch 1 und eine Vorrichtung nach Anspruch 8 gelöst. Vorteilhafte Ausgestaltungen und Weiterbildungen sind Gegenstände der abhängigen Ansprüche.

Bei dem erfindungsgemäßen Verfahren werden graphische Objekte angezeigt, wobei jede Mediendatei jeweils einem graphischen Objekt zugeordnet wird. Über ein Merkmal der graphischen Objekte werden erste Wahrscheinlichkeiten angezeigt, mit denen die Mediendateien zur Wiedergabe ausgewählt werden. Weiterhin wird eine Bedienaktion eines Nutzers erfasst, mit der das Merkmal zumindest eines graphischen Objekts verändert wird. In Abhängigkeit von der Veränderung des Merkmals des zumindest einen graphischen Objekts werden den graphischen Objekten zweite Wahrscheinlichkeiten zugeordnet. Schließlich werden die Mediendateien in Abhängigkeit von den zweiten Wahrscheinlichkeiten zur Wiedergabe ausgewählt. Vorteilhafterweise kann ein Nutzer durch die Bedienaktion direkt die Wahrscheinlichkeit beeinflussen, mit der eine Mediendatei wiedergegeben wird. Dadurch kann der Nutzer, insbesondere wenn sich seine Hörgewohnheiten ändern, neuen Mediendateien eine höhere Wiedergabewahrscheinlichkeit bei einer Shuffle-Funktion zuordnen, als älteren Mediendateien.

Insbesondere ist das Merkmal der graphischen Objekte vor der Bedienaktion für alle graphischen Objekte gleich, so dass jede Mediendatei mit gleicher erster Wahrscheinlichkeit zur Wiedergabe ausgewählt wird. Das Merkmal des zumindest einen graphischen Objekts wird durch die Bedienaktion verändert. Nach der Bedienaktion weist die Mediendatei, der das zumindest eine graphische Objekt zugeordnet ist, in Abhängigkeit von der Bedienaktion eine höhere/geringere zweite Wahrscheinlichkeit auf, während andere, insbesondere alle anderen, Mediendateien entsprechend geringere/höhere zweite Wahrscheinlichkeiten aufweisen. Wird durch die Bedienaktion die erste Wahrscheinlichkeit der Mediendatei, die dem zumindest einen graphischen Objekt zugeordnet ist, erhöht, weisen also andere, insbesondere alle anderen, Mediendateien eine geringere zweite Wahrscheinlichkeit auf. Wird durch die Bedienaktion die erste Wahrscheinlichkeit der Mediendatei, die dem zumindest einen graphischen Objekt zugeordnet ist, verringert, weisen andere, insbesondere alle anderen, Mediendateien eine höhere zweite Wahrscheinlichkeit auf. Die zweiten Wahrscheinlichkeiten für die anderen Mediendateien werden vorteilhafterweise automatisch an die zweite Wahrscheinlichkeit der Mediendatei, die nach der Bedienaktion dem zumindest einen graphischen Objekt zugeordnet ist, angepasst.

Bevorzugt ist das Merkmal die Größe der graphischen Objekte, wobei durch ein Vergrößern/Verkleinern des zumindest einen graphischen Objekts die erste Wahrscheinlichkeit der dem zumindest einen graphischen Objekt zugeordneten Mediendatei erhöht/verringert wird. Durch Vergrößern des zumindest einen graphischen Objekts wird die erste Wahrscheinlichkeit also erhöht und bei Verkleinern des zumindest einen graphischen Objekts wird die erste Wahrscheinlichkeit der zugehörigen Mediendatei verringert. Die Größe ist ein besonders einfach zu manipulierendes Merkmal eines graphischen Objekts. Es entspricht z.B. der Fläche des graphischen Objekts bei der Darstellung. Alternativ kann auch die Farbe der graphischen Objekte das Merkmal darstellen.

In dem erfindungsgemäßen Verfahren ist die Bedienaktion eine Geste des Nutzers auf einer Anzeigefläche mit berührungsempfindlicher Oberfläche. Dadurch ist das Verfahren besonders einfach durchzuführen. Insbesondere kann das Verfahren dann auf gängigen Smartphones oder Tablet-Computern, die in der Regel mit berührungsempfindlichen Bildschirmen ausgestattet sind, ausgeführt werden.

Dabei wird das zumindest eine graphische Objekt ausgewählt, während die anderen graphischen Objekte nicht ausgewählt werden. Die berührungsempfindliche Oberfläche wird an zumindest zwei Punkten berührt, wobei das ausgewählte graphische Objekt dadurch vergrößert/verkleinert wird, dass der Abstand zwischen den zwei Punkten vergrößert/verkleinert wird. Dies entspricht insbesondere einer sogenannten "Pinch-in"-Geste bei einer Vergrößerung des graphischen Objekts und einer sogenannten "Pinch-out"-Geste bei einer Verkleinerung des graphischen Objekts. Dies ist eine Geste, die dem Nutzer in der Regel durch Zoom-Aktionen bekannt ist. Diese einfache und zur Veränderung der Größe eines Objekts auch intuitive Geste ist daher besonders vorteilhaft für das erfindungsgemäße Verfahren. Weiterhin muss der Nutzer das graphische Objekt zunächst nur auswählen. Die Bedienaktion findet dann in einem beliebigen Bereich der berührungsempfindlichen Oberfläche statt.

In einer anderen Ausgestaltung werden die Größen der nicht ausgewählten graphischen Objekte entsprechend der Vergrößerung/Verkleinerung der Größe des ausgewählten zumindest einen graphischen Objekts verkleinert/vergrößert. Je nachdem, ob ein graphisches Objekt also vergrößert wird, um die erste Wahrscheinlichkeit zu erhöhen, oder verkleinert wird, um die erste Wahrscheinlichkeit zu verringern, werden die graphischen Objekte, die nicht ausgewählt sind, dann entsprechend verkleinert oder vergrößert dargestellt. Der Nutzer bekommt also sofort eine Rückmeldung darüber, welche Auswirkungen eine Vergrößerung bzw. Verkleinerung der ersten Wahrscheinlichkeit der dem ausgewählten graphischen Objekt zugeordneten Mediendatei auf die ersten Wahrscheinlichkeiten der restlichen Mediendateien hat.

Insbesondere korreliert das Merkmal des zumindest einen graphischen Objekts linear mit der zweiten Wahrscheinlichkeit. Dies erlaubt eine schnelle und einfache Bestimmung der zweiten Wahrscheinlichkeit. Insbesondere wird zur Größenbestimmung des graphischen Objekts eine Seitenlänge, Diagonale oder Fläche des graphischen Objekts verwendet.

Die Mediendateien und ihre ersten und/oder zweiten Wahrscheinlichkeiten können in einer Liste angezeigt werden, wobei die Mediendatei mit der größten ersten und/oder zweiten Wahrscheinlichkeit an erster Stelle der Liste angezeigt wird. Dabei werden die ersten und/oder zweiten Wahrscheinlichkeiten insbesondere als numerische Werte angegeben. Dadurch kann sich der Nutzer nicht nur an dem Merkmal der graphischen Objekte orientieren, sondern kann eine genaue Einstellung der Wahrscheinlichkeit vornehmen. Zudem wird dem Nutzer klar dargestellt, welche Mediendatei die höchste Wahrscheinlichkeit hat, um ausgewählt und wiedergegeben zu werden. Dies ist insbesondere dann vorteilhaft, wenn die Wahrscheinlichkeiten zweiter Mediandateien derart nahe beieinander liegen, dass die Größen der graphischen Objekte, denen sie zugeordnet sind, visuell nicht mehr unterschieden werden können.

In einer anderen Ausgestaltung ist die erste und/oder die zweite Wahrscheinlichkeit einer Mediendatei die Wahrscheinlichkeit, mit der die Mediendatei aus einer Menge von Mediendateien als nächstes zur Wiedergabe ausgewählt wird. Dadurch lässt sich insbesondere die Wahrscheinlichkeit einer Mediendatei aus einer Menge von Mediendateien, die in einer Liste für eine zufällige Wiedergabe aufgelistet sind, direkt beeinflussen. Dadurch ist die Reihenfolge der Wiedergabe innerhalb einer Shuffle-Funktion zwar nicht mehr komplett zufällig. Da der Nutzer die Wahrscheinlichkeiten jedoch selbst beeinflusst hat, ist dies von ihm gewollt.

Bevorzugt sind die Mediendateien Musiktitel und die graphischen Objekte Darstellungen der Albumcover der jeweiligen Musiktitel. Dadurch kann also vorteilhafterweise eine Wiedergabe einer Musiksammlung innerhalb einer Shuffle-Funktion beeinflusst werden. Alternativ können die Mediendateien auch Videodateien seien, deren Reihenfolge der Wiedergabe vom Nutzer beeinflusst wird.

Das Verfahren wird insbesondere in einem Fahrzeug ausgeführt. Denn insbesondere beim Führen eines Fahrzeugs ist eine Bedienung eines Infotainmentsystems über einfache und intuitive Bedienaktionen erwünscht. Der Fahrer sollte nämlich durch die Bedienung eines Infotainmentsystems so wenig wie möglich vom Straßengeschehen abgelenkt werden.

Ferner betrifft die Erfindung eine Vorrichtung zum Steuern der Auswahl von Mediendateien zur Wiedergabe. Die erfindungsgemäße Vorrichtung umfasst eine Anzeigevorrichtung, auf der graphische Objekte anzeigbar sind, wobei jede Mediendatei jeweils einem graphischen Objekt zuordenbar ist. Weiterhin umfasst die Vorrichtung eine Steuervorrichtung, mittels welcher die Anzeigevorrichtung so ansteuerbar ist, dass erste Wahrscheinlichkeiten über ein Merkmal der graphischen Objekte anzeigbar sind, mit denen die Mediendateien zur Wiedergabe auswählbar sind. Die Vorrichtung umfasst zudem eine Erfassungsvorrichtung, mittels der eine Bedienaktion eines Nutzers erfassbar ist, wobei mit der Bedienaktion das Merkmal zumindest eines graphischen Objekts veränderbar ist. Außerdem umfasst die erfindungsgemäße Vorrichtung eine Recheneinheit, mittels der in Abhängigkeit von der Veränderung des Merkmals des zumindest einen graphischen Objekts den Mediendateien zweite Wahrscheinlichkeiten zuordenbar sind, wobei die Mediendateien mittels der Steuervorrichtung in Abhängigkeit von den zweiten Wahrscheinlichkeiten auswählbar sind, und eine Wiedergabevorrichtung, mittels welcher die ausgewählten Mediendateien wiedergebbar sind. Die Vorrichtung ist insbesondere dazu geeignet, das erfindungsgemäße Verfahren auszuführen, und weist daher alle Vorteile des Verfahrens auf.

Die Erfassungsvorrichtung umfasst eine auf einer Anzeigefläche der Anzeigevorrichtung angeordnete berührungsempfindliche Oberfläche. Dadurch kann die Bedienaktion einfach und intuitiv auf der Anzeigefläche der Anzeigevorrichtung erfasst und ausgeführt werden.

In einer Ausgestaltung umfasst die Vorrichtung ein Mediensystem, in dem die Mediendateien abgespeichert sind. Das Mediensystem kann dabei Teil der Vorrichtung sein oder über eine Schnittstelle mit der Vorrichtung gekoppelt werden.

insbesondere ist die erfindungsgemäße Vorrichtung in einem Innenraum eines Fahrzeugs angeordnet.

Ferner betrifft die Erfindung ein Fahrzeug, das eine erfindungsgemäße Vorrichtung umfasst.

Im Folgenden wird die Erfindung anhand von Ausführungsbeispielen mit Bezug zu den Zeichnungen erläutert.
- Figur 1: zeigt ein Ausführungsbeispiel der erfindungsgemäßen Vorrichtung,
- Figuren 2a bis 2c: zeigen Anzeigen, die von einem ersten Ausführungsbeispiel eines erfindungsgemäßen Verfahrens erzeugt werden,
- Figur 3: zeigt ein Beispiel einer Korrelation der Größe eines graphischen Objekts mit der Wahrscheinlichkeit,
- Figur 4: zeigt eine Tabelle mit beispielhaften ersten Wahrscheinlichkeiten vor der Bedienaktion und zweiten Wahrscheinlichkeiten nach der Bedienaktion,
- Figur 5: zeigt eine Anzeige auf der Anzeigefläche, die von einem zweiten Ausführungsbeispiel des erfindungsgemäßen Verfahrens erzeugt wird und
- Figur 6: zeigt ein Beispiel einer Anordnung der erfindungsgemäßen Vorrichtung in einem Fahrzeug.

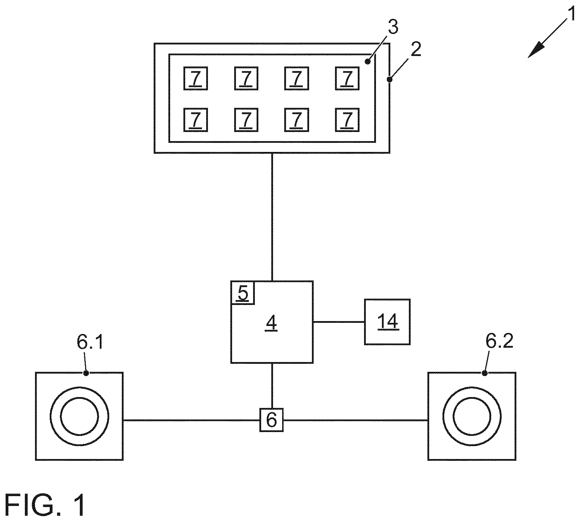

Mit Bezug zu der Figur 1 wird ein Ausführungsbeispiel einer erfindungsgemäßen Vorrichtung 1 erläutert.

Die Vorrichtung 1 umfasst eine Anzeigevorrichtung 2. Die Anzeigefläche der Anzeigevorrichtung 2 umfasst eine berührungsempfindliche Oberfläche und dient als Erfassungsvorrichtung 3. Im Folgenden wird auf die berührungsempfindliche Oberfläche als Erfassungsvorrichtung 3 mit dem Bezugszeichen 3 Bezug genommen.

Auf der Anzeigefläche der Anzeigevorrichtung 2 sind mehrere graphische Objekte 7 anzeigbar. Die graphischen Objekte 7 werden dabei in Abhängigkeit von den in einem Mediensystem 14 gespeicherten Mediendateien auf der Anzeigefläche erzeugt.

Die graphischen Objekte 7 weisen ein Merkmal S auf, dass über Bedienaktionen eines Nutzers auf der berührungsempfindlichen Oberfläche 3 der Anzeigevorrichtung 2 veränderbar ist. Das Merkmal S der graphischen Objekte 7 ist dabei insbesondere deren Größe. Alternativ kann das Merkmal S der graphischen Objekte 7 auch deren Farbe sein. Das Merkmal S korreliert insbesondere mit einer zweiten Wahrscheinlichkeit P2 der Mediendateien, die der Nutzer über eine Bedienaktion auf der berührungsempfindlichen Oberfläche 3 einstellen kann.

Weiterhin umfasst die Vorrichtung 1 eine Steuervorrichtung 4. Die Steuervorrichtung 4 ist mit der Anzeigevorrichtung 2 gekoppelt und kann diese ansteuern. In der Steuervorrichtung 4 ist eine Recheneinheit 5 integriert. Die Recheneinheit 5 kann dabei aus dem Merkmal S der graphischen Objekte 7, also deren Größe, erste Wahrscheinlichkeiten P1 vor der Bedienaktion und zweite Wahrscheinlichkeiten P2 bereits während oder nach der Bedienaktion ermitteln, mit der die Mediendateien, die den graphischen Objekten 7 zugeordnet sind, zur Wiedergabe ausgewählt werden.

Im vorliegenden Beispiel sind die Mediendateien Musiktitel. Die graphischen Objekte 7 stellen beispielsweise Albumcover dar, die die Musiktitel repräsentieren. Auf der Anzeigefläche werden z.B. alle Mediendateien oder eine Teilmenge mittels zugeordneter graphischer Objekte 7 angezeigt.

Zudem umfasst die Vorrichtung 1 eine Wiedergabevorrichtung 6, die im vorliegenden Beispiel als Musikabspielgerät mit Lautsprechern 6.1 und 6.2 ausgebildet ist. Mittels der Wiedergabevorrichtung 6 wird dann anhand der von der Recheneinheit 5 ermittelten ersten P1 oder zweiten Wahrscheinlichkeiten P2 eine Mediendatei zur Wiedergabe ausgewählt und schließlich wiedergegeben.

Die Anzeigevorrichtung 2 mit berührungsempfindlicher Oberfläche 3, die Steuervorrichtung 4, die Recheneinheit 5 und die Wiedergabevorrichtung 6 mit den Lautsprechern 6.1 und 6.2 können insbesondere Teil eines Smartphones oder eines Tablet-Computers sein,

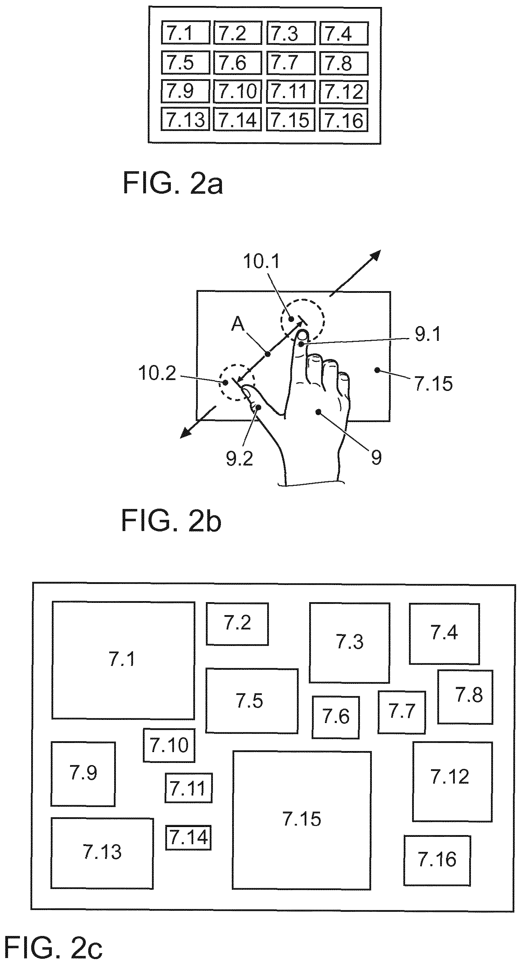

Mit Bezug zu den Figuren 2a bis 2c, 3 und 4 wird ein erstes Ausführungsbeispiel des erfindungsgemäßen Verfahrens erläutert:
Als Ausgangssituation werden die graphischen Objekte 7.1 bis 7.16 auf der Anzeigefläche dargestellt. Der Nutzer aktiviert eine Funktion, bei der die Mediendateien zufällig wiedergegeben werden, d.h. eine sogenannte Shuffle-Funktion. Zunächst ist den Mediendateien eine erste Wahrscheinlichkeit P1 zugeordnet, mit der die den graphischen Objekten 7.1 bis 7.16 zugeordneten Mediendateien zur Wiedergabe ausgewählt werden. Dabei sind zu Beginn des Verfahrens alle ersten Wahrscheinlichkeiten P1 gleich. Dies wird dem Nutzer dadurch dargestellt, dass alle graphischen Objekte 7.1 bis 7.16 die gleiche Größe S aufweisen. Dabei wird bei sechzehn Mediendateien jeder Mediendatei eine erste Wahrscheinlichkeit P1 von 6,25% zugeordnet.

Im vorliegenden Beispiel möchte der Nutzer den Mediendateien eine zweite Wahrscheinlichkeit P2 zuordnen. Das Vorgehen wird dabei beispielhaft am graphischen Objekt 7.15 erläutert. Der dem graphischen Objekt 7.15 zugeordneten Mediendatei möchte der Nutzer beispielsweise eine höhere zweite Wahrscheinlichkeit P2 zuordnen. Dazu berührt er das graphische Objekt 7.15 an zwei Punkten 10.1 und 10.2 mit einem gewissen Abstand A. Den Punkt 10.1 berührt er dabei mit seinem rechten Zeigefinger 9.1 und den Punkt 10.2 mit seinem rechten Daumen 9.2. Darauffolgend vergrößert der Nutzer den Abstand A dadurch, dass er seinen Daumen 9.2 und seinen Zeigefinger 9.1 auseinander bewegt. Diese Bedienaktion wird von der berührungsempfindlichen Oberfläche bzw. der Erfassungseinrichtung 3 erfasst. Diese übermittelt ein Signal an die Recheneinheit 5. In der Recheneinheit 5 sind die ersten Wahrscheinlichkeiten P1 abgelegt, welche den Mediendateien über die Größe S der graphischen Objekte 7.1 bis 7.16 zugeordnet worden sind. Dabei ermittelt die Recheneinheit 5 ständig eine zweite Wahrscheinlichkeit P2.

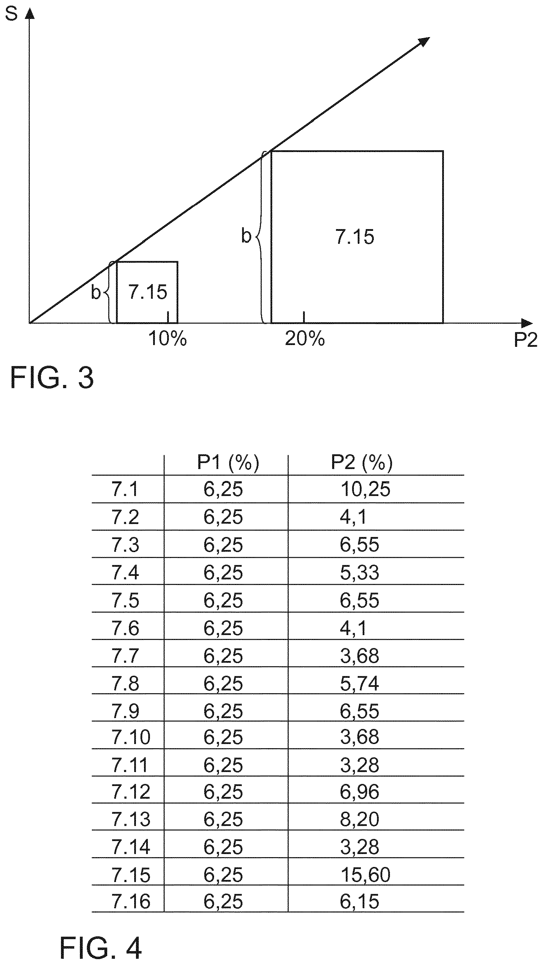

Die Beziehung zwischen der Größe S der graphischen Objekte 7.1 bis 7.16 und der zweiten Wahrscheinlichkeit P2 ist dabei beispielhaft für das graphische Objekt 7.15 in Figur 3 gezeigt. Die Beziehung kann eine lineare Korrelation sein, wobei auf der x-Achse die Wahrscheinlichkeit P2 und auf der y-Achse die Größe S des graphischen Objekts 7.15 aufgetragen ist. Zur Messung der Größe S des graphischen Objekts 7.15 wird die Seitenlänge b des graphischen Objekts 7.15 verwendet. Je größer dabei b ist, desto größer ist die zweite Wahrscheinlichkeit P2 der dem graphischen Objekt 7.15 zugeordneten Mediendatei.

Die Größe S des graphischen Objekts 7.15 am Ende der Bedienaktion bestimmt dabei die zweite Wahrscheinlichkeit P2, die der Mediendatei, die dem graphischen Objekt 7.15 zugeordnet ist, letztendlich zugeordnet wird. Die Geste, mit der das graphische Objekt 7.15 vergrößert wird, wird auch als "Pinch-in"-Geste bezeichnet. Diese wird insbesondere auch bei Zoom-Vorgängen verwendet und ist daher besonders intuitiv.

Möchte der Nutzer die erste Wahrscheinlichkeit P1 verringern, so wird er den Abstand A zwischen den beiden Berührungspunkten 10.1 und 10.2 dadurch verringern, dass er seinen Zeigefinger 9.1 und seinen Daumen 9.2 zueinander bewegt. Diese Geste wird auch als "Pinch-out"-Geste bezeichnet und ist ebenso intuitiv wie die "Pinch-in"-Geste.

Im vorliegenden Beispiel weist der Nutzer jeder Mediendatei eine zweite Wahrscheinlichkeit P2 durch eine "Pinch-in" oder "Pinch-out"-Geste zu. Das Endergebnis ist dabei in Figur 2c dargestellt. Jedem graphischen Objekt 7.1 bis 7.16 wurde durch die im Vorgang erläuterte Bedienaktion eine zweite Wahrscheinlichkeit P2 zugeordnet. Die zweiten Wahrscheinlichkeiten P2 sind in Figur 4 beispielhaft angegeben. Daraus wird klar, dass die Mediendatei, die dem graphischen Objekt 7.15 zugeordnet ist, nun die höchste zweite Wahrscheinlichkeit P2 aufweist, aus der Menge der Mediendateien ausgewählt und wiedergegeben zu werden. Die zweiten Wahrscheinlichkeiten P2 werden in der Recheneinheit 5 hinterlegt und bei einem neuen Start der Vorrichtung 1 als erste Wahrscheinlichkeiten P1 verwendet.

Alternativ wird auf der Anzeigefläche ein Schaltelement angezeigt, mit dem der Nutzer alle Wahrscheinlichkeiten P2 wieder auf den gleichen Wert setzen kann.

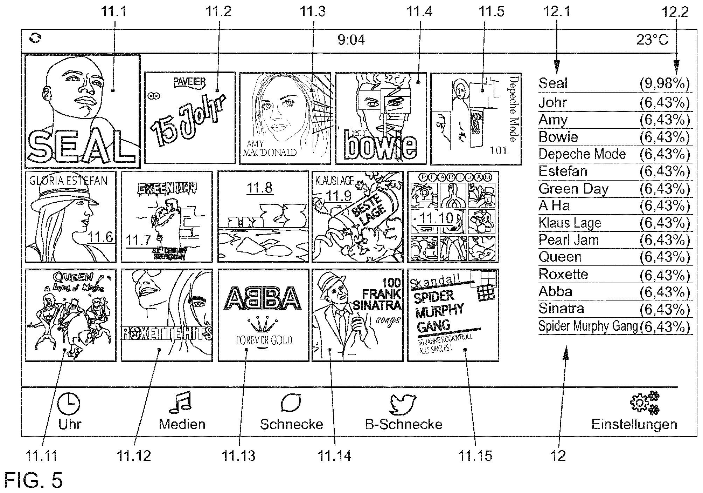

Mit Bezug zu Figur 5 wird ein zweites Ausführungsbeispiel des erfindungsgemäßen Verfahrens erläutert:
Die Mediendateien sind dabei Musikalben, also keine einzelnen Musiktitel mehr, wobei die Shuffle-Funktion dann zufällig ein Album auswählt, von dem dann alle Musiktitel der Reihe nach wiedergegeben werden. Alternativ können auch den einzelnen Musiktiteln innerhalb der Alben dann zweite Wahrscheinlichkeiten P2 zugeordnet werden. Ein neues Album wird erst dann wieder zufällig ausgesucht, wenn alle Musiktitel aus dem ausgewählten Musikalbum abgespielt worden sind. Möchte der Nutzer ausschließen, dass ein Musiktitel eines Albums wiedergegeben wird, so ordnet er dem graphischen Objekt, welchem der Musiktitel zugeordnet ist, die zweite Wahrscheinlichkeit null zu. In diesem Fall kann das entsprechende graphische Objekt ausgegraut dargestellt werden.

In der Ausgangssituation des zweiten Ausführungsbeispiels werden lediglich fünfzehn graphische Objekte 11.1 bis 11.15 auf der Anzeigefläche angezeigt. Dabei sind die graphischen Objekte 11.1 bis 11.15 gleich groß. Bei fünfzehn Mediendateien in einem Mediensystem 14 beträgt die Wahrscheinlichkeit P1 für jede Mediendatei, ausgewählt und wiedergegeben zu werden, ungefähr 6,66 %. Zu Beginn des Verfahrens weisen die graphischen Objekte 11.1 bis 11.15 die gleiche Größe S auf. Dadurch wird dem Nutzer angezeigt, dass alle Mediendateien die gleiche erste Wahrscheinlichkeit P1 aufweisen, ausgewählt und wiedergegeben zu werden. Zudem werden in einer Liste 12, die neben den graphischen Objekten 11.1 bis 11.15 angezeigt wird, die Namen der Interpreten der Musikalben sowie die numerische Werte der ersten Wahrscheinlichkeiten P1, dass ein Musikalbum als nächstes ausgewählt wird, angezeigt. Zu Beginn des Verfahrens wird demnach für jeden Interpreten der numerische Wert 6,66 % in der Spalte 12.2 der Liste 12 angezeigt.

Der Nutzer möchte nun die erste Wahrscheinlichkeit P1 von nur einer Mediendatei erhöhen, beispielsweise des Musikalbums, das dem graphischen Objekt 11.1 zugeordnet ist. Dazu berührt der Nutzer das graphische Objekt 11.1 und wählt es somit aus. Die "Pinch-in"-Geste führt er dann in einem beliebigen Bereich der berührungsempfindlichen Oberfläche 3 aus. Wird das Verfahren in einem Fahrzeug 8 ausgeführt, kann dies insbesondere auf holprigen Straßen vorteilhaft sein, wo es dem Nutzer schwer fällt, seine Hand an einer Stelle zu halten.

Gleichzeitig zur Vergrößerung des graphischen Objekts 11.1 ändert sich der numerische Wert der Wahrscheinlichkeit in der Spalte 12.2 der Liste 12. Dadurch wird dem Nutzer nicht nur ein visueller Eindruck über die Wahrscheinlichkeitsänderung, sondern eine in Zahlen gefasste Wahrscheinlichkeitsänderung gegeben. Gleichzeitig werden auch die numerischen Werte aller anderen Mediendateien angepasst. Denn wird die erste Wahrscheinlichkeit P1 einer Mediendatei erhöht, verringern sich gleichzeitig die ersten Wahrscheinlichkeiten P1 aller anderen Mediendateien in gleichem Maße.

Wird also die erste Wahrscheinlichkeit P1 der dem graphischen Objekt 11.1 zugeordneten Mediendatei von 6,66 % auf 9,98 % erhöht, werden die ersten Wahrscheinlichkeiten P1 der anderen Mediendateien automatisch von 6,66 % auf die zweite Wahrscheinlichkeit P2 von 6,43 % verringert. Um zu gewährleisten, dass trotz Vergrößerung des graphischen Objekts 11.1 noch alle graphischen Objekte 11.1 bis 11.15 Platz auf der Anzeigefläche haben, können die in der untersten Reihe angeordneten graphischen Objekte 11.14 und 11.15 auf der Anzeigefläche nach rechts verschoben werden, die Größen der graphischen Objekte 11.1 bis 11.12, 11.14 und 11.15 sonst jedoch nicht verändert werden. Die Anzeige auf der Anzeigefläche nach der Bedienaktion ist dabei in Figur 5 dargestellt.

Alternativ können auch die Größen der graphischen Objekte 11.1 bis 11.12, 11.14 und 11.15 in gleichem Maße verkleinert werden.

Das erste und das zweite Ausführungsbeispiel des erfindungsgemäßen Verfahrens sind beliebig miteinander kombinierbar. So kann auch im ersten Ausführungsbeispiel die Geste in einem beliebigen Bereich der Anzeigefläche ausgeführt werden oder im zweiten Ausführungsbeispiel auf dem graphischen Objekt 11.1 ausgeführt werden.

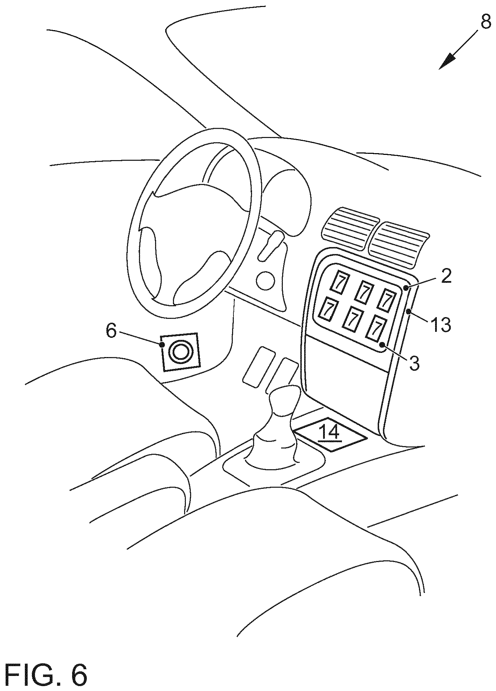

In Figur 6 wird ein Fahrzeug 8 mit einer mit Figur 1 erläuterten Vorrichtung 1 gezeigt. Die Anzeigevorrichtung 2 mit der berührungsempfindlichen Oberfläche als Erfassungsvorrichtung 3 ist dabei in der Mittelkonsole 13 des Fahrzeugs 8 angeordnet. Das Mediensystem 14 kann dabei entweder im Fahrzeug 8 selbst verbaut sein oder extern über eine Schnittstelle angeschlossen werden. Ein Mediensystem 14 kann beispielsweise ein MP3-Player, ein Smartphone oder ein Tablet-Computer sein. Die Wiedergabevorrichtung 6 kann entweder Teil des Fahrzeugs 8 sein oder auch extern angeschlossen oder mit dem Fahrzeug 8 gekoppelt sein. Ist die Wiedergabevorrichtung extern angeschlossen oder mit dem Fahrzeug 8 gekoppelt, kann sie ebenso eine MP3-Player, ein Smartphone oder ein Tablet-Computer sein. Insbesondere können dann trotzdem die Lautsprecher 6.1 und 6.2 des Fahrzeugs 8 zur Wiedergabe verwendet werden.

### Bezugszeichenliste

- 1: Vorrichtung
- 2: Anzeigevorrichtung
- 3: Erfassungsvorrichtung; berührungsempfindliche Oberfläche
- 4: Steuervorrichtung
- 5: Recheneinheit
- 6: Wiedergabevorrichtung
- 6.1, 6.2: Lautsprecher
- 7: graphische Objekte
- 7.1 - 7-16: graphische Objekte
- 8: Fahrzeug
- 9: Hand
- 9.1: Daumen
- 9.2: Zeigefinger
- 10.1, 10.2: Berührungspunkte
- 11.1 - 11.15: graphische Objekte
- 12: Liste
- 12.1, 12.2: Spalten der Liste
- 13: Mittelkonsole
- 14: Mediensystem
- A: Abstand der Berührungspunkte
- b: Seitenlänge der graphischen Objekte
- P1: erste Wahrscheinlichkeit
- P2: zweite Wahrscheinlichkeit
- S: Merkmal der graphischen Objekte, Größe der graphischen Objekte

## Patentansprüche

1. Verfahren zum Steuern der Auswahl von Mediendateien zur Wiedergabe, bei dem
graphische Objekte (7, 7.1 - 7.17, 11.1 - 11.15) angezeigt werden, wobei jede Mediendatei jeweils einem graphischen Objekt (7, 7.1 - 7.17, 11.1 - 11.15) zugeordnet wird,
über ein Merkmal (S) der graphischen Objekte (7, 7.1 - 7.17, 11.1 - 11.15) erste Wahrscheinlichkeiten (P1) angezeigt werden, mit denen die Mediendateien zur Wiedergabe ausgewählt werden,
eine Bedienaktion eines Nutzers erfasst wird, mit der das Merkmal (S) zumindest eines graphischen Objekts (7, 7.1 - 7.17, 11.1 - 11.15) verändert wird,
wobei die Bedienaktion eine Geste des Nutzers auf einer Anzeigefläche mit einer berührungsempfindlichen Oberfläche (3) ist,
wobei das zumindest eine graphische Objekt (7.15, 11.13) zunächst ausgewählt wird, während die anderen graphischen Objekte (7.1 - 7.14, 7.16, 11.1 - 11.12, 11.14, 11.15) nicht ausgewählt werden,
wobei die berührungsempfindliche Oberfläche (3) dann an zumindest zwei Punkten (10.1, 10.2) berührt wird, wobei das ausgewählte graphische Objekt dadurch vergrößert/verkleinert wird, dass der Abstand (A) zwischen den zwei Punkten (10.1, 10.2) vergrößert/verkleinert wird, und
wobei die Bedienaktion in einem beliebigen Bereich der berührungsempfindlichen Oberfläche stattfindet,
in Abhängigkeit von der Veränderung des Merkmals (S) des zumindest einen graphischen Objekts (7.15, 11.13) den graphischen Objekten (7, 7.1 - 7.17, 11.1 - 11.15) zweite Wahrscheinlichkeiten (P2) zugeordnet werden und
die Mediendateien in Abhängigkeit von den zweiten Wahrscheinlichkeiten (P2) zur Wiedergabe ausgewählt werden.

2. Verfahren nach Anspruch 1, wobei
das Merkmal (S) der graphischen Objekte (7, 7.1 - 7.17, 11.1 - 11.15) vor der Bedienaktion für alle graphischen Objekte (7, 7.1 - 7.17, 11.1 - 11.15) gleich ist, so dass jede Mediendatei mit gleicher erster Wahrscheinlichkeit (P1) zur Wiedergabe ausgewählt wird,
das Merkmal (S) des zumindest einen graphischen Objekts (7.15, 11.13) durch die Bedienaktion verändert wird und
nach der Bedienaktion die Mediendatei, der das eine graphische Objekt (7.15, 11.13) zugeordnet ist, in Abhängigkeit von der Bedienaktion eine höhere/geringere zweite Wahrscheinlichkeit (P2) aufweist, während andere Mediendateien eine entsprechend geringere/höhere zweite Wahrscheinlichkeit (P2) aufweisen.

3. Verfahren nach Anspruch 1 oder 2, wobei das Merkmal die Größe (S) der graphischen Objekte (7, 7.1 - 7.17, 11.1 - 11.15) ist, wobei durch ein Vergrößern/Verkleinern des zumindest einen graphischen Objekts (7.15, 11.13) die erste Wahrscheinlichkeit (P1) der dem zumindest einen graphischen Objekt (7.15, 11.13) zugeordneten Mediendatei erhöht/verringert wird.

4. Verfahren nach Anspruch 1, wobei die Größen (S) der nicht ausgewählten graphischen Objekte (7.1 - 7.14, 7.16, 11.1 - 11.12, 11.14, 11.15) entsprechend der Vergrößerung/Verkleinerung der Größe (S) des ausgewählten zumindest einen graphischen Objekts (7.15, 11.13) verkleinert/vergrößert werden.

5. Verfahren nach einem der vorhergehenden Ansprüche, wobei das Merkmal (S) des zumindest einen graphischen Objekts (7.15, 11.13) linear mit der zweiten Wahrscheinlichkeit (P2) korreliert.

6. Verfahren nach einem der vorhergehenden Ansprüche, wobei die Mediendateien und deren erste (P1) und/oder zweite Wahrscheinlichkeiten (P2) in einer Liste (12) angezeigt werden, wobei die Mediendatei mit der größten ersten (P1) und/oder zweiten Wahrscheinlichkeit (P2) an erster Stelle der Liste angezeigt wird.

7. Verfahren nach einem der vorhergehenden Ansprüche, wobei die Mediendateien Musiktitel sind und die graphischen Objekte (7, 7.1 - 7.17, 11.1 - 11.15) Darstellungen der Albumcover der jeweiligen Musiktitel sind.

8. Vorrichtung (1) zum Steuern der Auswahl von Mediendateien zur Wiedergabe, mit
einer Anzeigevorrichtung (2), auf der graphische Objekte (7, 7.1 - 7.17, 11.1 - 11.15) anzeigbar sind, wobei jede Mediendatei jeweils einem graphischen Objekt (7, 7.1 - 7.17, 11.1 - 11.15) zuordenbar ist, wobei die Anzeigefläche eine berührungsempfindliche Oberfläche (3) aufweist,
einer Steuervorrichtung (4), mittels welcher die Anzeigevorrichtung (2) so ansteuerbar ist, dass erste Wahrscheinlichkeiten (P1) über ein Merkmal (S) der graphischen Objekte (7, 7.1 - 7.17, 11.1 - 11.15) anzeigbar sind, mit denen die Mediendateien zur Wiedergabe auswählbar sind,
einer Erfassungsvorrichtung (3), mittels der eine Bedienaktion eines Nutzers erfassbar ist, wobei mit der Bedienaktion das Merkmal (S) zumindest eines graphischen Objekts (7.15, 11.13) veränderbar ist,
wobei die Bedienaktion eine Geste des Nutzers auf der berührungsempfindlichen Oberfläche (3) ist, bei der das zumindest eine graphische Objekt (7.15, 11.13) zunächst auswählbar ist, während die anderen graphischen Objekte (7.1 - 7.14, 7.16, 11.1 - 11.12, 11.14, 11.15) nicht ausgewählt werden, wobei die berührungsempfindliche Oberfläche (3) dann an zumindest zwei Punkten (10.1, 10.2) berührt wird, wobei das ausgewählte graphische Objekt dadurch vergrößert/verkleinert wird, dass der Abstand (A) zwischen den zwei Punkten (10.1, 10.2) vergrößert/verkleinert wird, und wobei die Bedienaktion in einem beliebigen Bereich der berührungsempfindlichen Oberfläche stattfindet,
einer Recheneinheit (5), mittels der in Abhängigkeit von der Veränderung des Merkmals (S) des zumindest einen graphischen Objekts (7.15, 11.13) den Mediendateien zweite Wahrscheinlichkeiten (P2) zuordenbar sind, wobei die Mediendateien mittels der Steuervorrichtung (4) in Abhängigkeit von den zweiten Wahrscheinlichkeiten (P2) auswählbar sind, und
einer Wiedergabevorrichtung (6), mittels welcher die ausgewählten Mediendateien wiedergebbar sind.

9. Vorrichtung (1) nach Anspruch 8, wobei die Erfassungsvorrichtung (3) eine auf einer Anzeigefläche der Anzeigevorrichtung (2) berührungsempfindliche Oberfläche umfasst.

10. Vorrichtung (1) nach Anspruch 8 oder 9, wobei die Vorrichtung (1) ein Mediensystem (14) umfasst, in dem die Mediendateien abgespeichert sind.

11. Vorrichtung (1) nach Anspruch 8, 9 oder 10, wobei die Vorrichtung (1) in einem Innenraum eines Fahrzeugs (8) angeordnet ist.

12. Fahrzeug (8) mit einer Vorrichtung (1) nach einem der Ansprüche 8 bis 11.

## Claims

1. Method for controlling the selection of media files for playback, in which method graphical objects (7, 7.1 - 7.17, 11.1 - 11.15) are displayed, each media file being assigned to a graphical object (7, 7.1 - 7.17, 11.1 - 11.15),
first probabilities (P1) are displayed by a feature (S) of the graphical objects (7, 7.1 - 7.17, 11.1 - 11.15), using which probabilities the media files are selected for playback,
an operating action of a user is detected, by means of which action the feature (S) of at least one graphical object (7, 7.1 - 7.17, 11.1 - 11.15) is changed,
the operating action being a gesture of the user on a display face comprising a touch-sensitive surface (3),
the at least one graphical object (7.15, 11.13) being initially selected, while the other graphical objects (7.1 - 7.14, 7.16, 11.1 - 11.12, 11.14, 11.15) are not selected,
the touch-sensitive surface (3) then being touched at at least two points (10.1, 10.2), the selected graphical object being enlarged/reduced by the distance (A) between the two points (10.1, 10.2) being enlarged/reduced, and
the operating action taking place in any region of the touch-sensitive surface,
second probabilities (P2) are assigned to the graphical objects (7, 7.1 - 7.17, 11.1 - 11.15) on the basis of the change in the feature (S) of the at least one graphical object (7.15, 11.13), and
the media files are selected for playback on the basis of the second probabilities (P2).

2. Method according to claim 1,
wherein
the feature (S) of the graphical objects (7, 7.1 - 7.17, 11.1 - 11.15) is the same for all graphical objects (7, 7.1 - 7.17, 11.1 - 11.15) prior to the operating action, so that each media file is selected for playback using the same first probability (P1),
the feature (S) of the at least one graphical object (7.15, 11.13) is changed by the operating action, and,
after the operating action, the media file which is assigned to the one graphical object (7.15, 11.13) has a higher/lower second probability (P2) depending on the operating action, while other media files have a correspondingly lower/higher second probability (P2).

3. Method according to either claim 1 or claim 2,
wherein
the feature is the size (S) of the graphical objects (7, 7.1 - 7.17, 11.1 - 11.15), wherein the first probability (P1) of the media file assigned to the at least one graphical object (7.15, 11.13) is increased/decreased by enlarging/reducing the at least one graphical object (7.15, 11.13).

4. Method according to claim 1,
wherein
the sizes (S) of the unselected graphical objects (7.1 - 7.14, 7.16, 11.1 - 11.12, 11.14, 11.15) are reduced/enlarged in accordance with the enlargement/reduction of the size (S) of the selected at least one graphical object (7.15, 11.13).

5. Method according to any of the preceding claims,
wherein
the feature (S) of the at least one graphical object (7.15, 11.13) correlates linearly with the second probability (P2).

6. Method according to any of the preceding claims,
wherein
the media files and their first probabilities (P1) and/or second probabilities (P2) are displayed in a list (12), wherein the media file having the greatest first probability (P1) and/or second probability (P2) is displayed in first place in the list.

7. Method according to any of the preceding claims,
wherein
the media files are music titles, and the graphical objects (7, 7.1 - 7.17, 11.1 - 11.15) are representations of the album covers of the respective music titles.

8. Device (1) for controlling the selection of media files for playback, comprising
a display device (2) on which graphical objects (7, 7.1 - 7.17, 11.1 - 11.15) can be displayed, it being possible to assign each media file to a graphical object (7, 7.1 - 7.17, 11.1 - 11.15), the display face comprising a touch-sensitive surface (3),
a control device (4) by means of which the display device (2) can be controlled such that first probabilities (P1) can be displayed by a feature (S) of the graphical objects (7, 7.1 - 7.17, 11.1 - 11.15), using which probabilities the media files can be selected for playback,
a detection device (3) by means of which an operating action of a user can be detected, wherein the feature (S) of at least one graphical object (7.15, 11.13) can be changed by the operating action,
the operating action being a gesture of the user on the touch-sensitive surface (3), in which gesture the at least one graphical object (7.15, 11.13) can be initially selected, while the other graphical objects (7.1 - 7.14, 7.16, 11.1 - 11.12, 11.14, 11.15) are not selected, the touch-sensitive surface (3) then being touched at at least two points (10.1, 10.2), the selected graphical object being enlarged/reduced by the distance (A) between the two points (10.1, 10.2) being enlarged/reduced, and the operating action taking place in any region of the touch-sensitive surface,
a computing unit (5) by means of which second probabilities (P2) can be assigned to the media files on the basis of the change in the feature (S) of the at least one graphical object (7.15, 11.13), it being possible to select the media files by means of the control device (4) on the basis of the second probabilities (P2), and
a playback device (6) by means of which the selected media files can be played back.

9. Device (1) according to claim 8,
wherein
the detection device (3) comprises a touch-sensitive surface on a display face of the display device (2).

10. Device (1) according to either claim 8 or claim 9,
wherein
the device (1) comprises a media system (14) in which the media files are stored.

11. Device (1) according to either claim 8, claim 9 or claim 10,
wherein
the device (1) is arranged in an interior of a vehicle (8).

12. Vehicle (8) comprising a device (1) according to any of claims 8 to 11.

## Revendications

1. Procédé de commande de la sélection de fichiers multimédias pour la lecture, dans lequel des objets graphiques (7, 7.1 - 7.17, 11.1 - 11.15) sont affichés, dans lequel chaque fichier multimédia est associé à respectivement un objet graphique (7, 7.1 - 7.17, 11.1 - 11.15),
des premières probabilités (P1) sont affichées par l'intermédiaire d'une caractéristique (S) des objets graphiques (7, 7.1 - 7.17, 11.1 - 11.15), selon lesquelles les fichiers multimédias sont sélectionnés pour la lecture,
une action de commande d'un utilisateur est détectée, avec laquelle la caractéristique (S) d'au moins un objet graphique (7, 7.1 - 7.17, 11.1 - 11.15) est modifiée,
dans lequel l'action de commande est un geste de l'utilisateur sur une surface d'affichage avec une surface tactile (3),
dans lequel l'au moins un objet graphique (7.15, 11.13) est d'abord sélectionné, tandis que les autres objets graphiques (7.1 - 7.14, 7.16, 11.1 - 11.12, 11.14, 11.15) ne sont pas sélectionnés,
dans lequel la surface tactile (3) est alors touchée en au moins deux points (10.1, 10.2), dans lequel l'objet graphique sélectionné est agrandi/réduit, en ce que la distance (A) entre les deux points (10.1, 10.2) est augmentée/réduite et
dans lequel l'action de commande a lieu dans une zone quelconque de la surface tactile,
en fonction de la modification de la caractéristique (S) de l'au moins un objet graphique (7.15, 11.13), des secondes probabilités (P2) sont associées aux objets graphiques (7, 7.1 - 7.17, 11.1 - 11.15) et
les fichiers multimédias sont sélectionnés en fonction des secondes probabilités (P2) pour la lecture.

2. Procédé selon la revendication 1,
dans lequel
la caractéristique (S) des objets graphiques (7, 7.1 - 7.17, 11.1 - 11.15) est identique pour tous les objets graphiques (7, 7.1 - 7.17, 11.1 - 11.15) avant l'action de commande, de sorte que chaque fichier multimédia est sélectionné pour la lecture avec une première probabilité (P1) identique,
la caractéristique (S) de l'au moins un objet graphique (7.15, 11.13) est modifiée par l'action de commande et
après l'action de commande, le fichier multimédia, auquel est associé l'objet graphique (7.15, 11.13), présente une seconde probabilité (P2) plus élevée/plus faible en fonction de l'action de commande, tandis que d'autres fichiers multimédias présente en conséquence une seconde probabilité (P2) plus faible/plus élevée.

3. Procédé selon la revendication 1 ou 2,
dans lequel
la caractéristique est la taille (S) des objets graphiques (7, 7.1 - 7.17, 11.1 - 11.15), dans lequel par une augmentation/une réduction de l'au moins un objet graphique (7.15, 11.13), la première probabilité (P1) du fichier multimédia associé à l'au moins un objet graphique (7.15, 11.13) est augmentée/réduite.

4. Procédé selon la revendication 1,
dans lequel
les tailles (S) des objets graphiques (7.1 - 7.14, 7.16, 11.1 - 11.12, 11.14, 11.15) non sélectionnés est réduite/augmentée de manière correspondant à l'augmentation/la réduction de la taille (S) de l'au moins un objet graphique (7.15, 11.13) sélectionné.

5. Procédé selon l'une des revendications précédentes,
dans lequel
la caractéristique (S) de l'au moins un objet graphique (7.15, 11.13) est corrélée de manière linéaire avec la seconde probabilité (P2).

6. Procédé selon l'une des revendications précédentes,
dans lequel
les fichiers multimédias et leur première (P1) et/ou seconde probabilité (P2) sont affichés dans une liste (12), dans lequel le fichier multimédia avec la plus grande première (P1) et/ou seconde probabilité (P2) est affiché en première place dans la liste.

7. Procédé selon l'une des revendications précédentes,
dans lequel
les fichiers multimédias sont des titres de musique et les objets graphiques (7, 7.1 - 7.17, 11.1 - 11.15) sont des représentations des pochettes d'album du titre de musique respectif.

8. Dispositif (1) pour la commande de la sélection de fichiers multimédias pour la lecture, comportant
un dispositif d'affichage (2), sur lequel des objets graphiques (7, 7.1 - 7.17, 11.1 - 11.15) peuvent être affichés, dans lequel chaque fichier multimédia peut respectivement être associé à un objet graphique (7, 7.1 - 7.17, 11.1 - 11.15), dans lequel la surface d'affichage présente une surface tactile (3),
un dispositif de commande (4), au moyen duquel le dispositif d'affichage (2) peut être commandé en sorte que des premières probabilités (P1) peuvent être affichées par l'intermédiaire d'une caractéristique (S) des objets graphiques (7, 7.1 - 7.17, 11.1 - 11.15), selon lesquelles les fichiers multimédias peuvent être sélectionnés pour la lecture,
un dispositif de détection (3), au moyen duquel une action de commande d'un utilisateur peut être détectée, dans lequel l'action de commande permet de modifier la caractéristique (S) d'au moins un objet graphique (7.15, 11.13),
dans lequel l'action de commande est un geste de l'utilisateur sur la surface tactile (3), dans lequel l'au moins un objet graphique (7.15, 11.13) peut d'abord être sélectionné, tandis que les autres objets graphiques (7.1 - 7.14, 7.16, 11.1 - 11.12, 11.14, 11.15) ne sont pas sélectionnés, dans lequel la surface tactile (3) est alors touchée en au moins deux points (10.1, 10.2), dans lequel l'objet graphique sélectionné est agrandi/réduit, en ce que la distance (A) entre les deux points (10.1, 10.2) est augmentée/réduite et dans lequel l'action de commande a lieu dans une zone quelconque de la surface tactile,
une unité de calcul (5), au moyen de laquelle, en fonction de la modification de la caractéristique (S) de l'au moins un objet graphique (7.15, 11.13), les fichiers multimédias peuvent être associés à des secondes probabilités (P2), dans lequel les fichiers multimédias peuvent être sélectionnés au moyen du dispositif de commande (4) en fonction des secondes probabilités (P2) et
un dispositif de lecture (6), au moyen duquel les fichiers multimédias sélectionnés peuvent être lus.

9. Dispositif (1) selon la revendication 8,
dans lequel
le dispositif de détection (3) comprend une surface tactile sur une surface d'affichage du dispositif d'affichage (2).

10. Dispositif (1) selon la revendication 8 ou 9,
dans lequel
le dispositif (1) comprend un système multimédia (14), dans lequel les fichiers multimédias sont stockés.

11. Dispositif (1) selon la revendication 8, 9 ou 10,
dans lequel
le dispositif (1) est agencé dans un habitacle d'un véhicule (8).

12. Véhicule (8) comportant un dispositif (1) selon l'une des revendications 8 à 11.
